# EUROPEAN PATENT SPECIFICATION

(11) **EP 3 660 075 B1**
(45) Date of publication and mention of the grant of the patent: **08.06.2022**
(21) Application number: 18209620.6
(22) Date of filing: 30.11.2018
(51) Int. Cl.: C08G 64/08, C08G 64/14, C08G 64/02, C08G 64/12, C08G 64/42

(54) **ENDCAPPED POLYCARBONATES, METHODS OF MANUFACTURE, AND ARTICLES FORMED THEREFROM**
ENDSTÄNDIGE POLYCARBONATE, VERFAHREN ZUR HERSTELLUNG UND DARAUS HERGESTELLTE ARTIKEL
POLYCARBONATES COIFFÉS, PROCÉDÉS DE FABRICATION ET ARTICLES FORMÉS À PARTIR DE CEUX-CI

(43) Date of publication of application: 03.06.2020
(73) Proprietor: SHPP Global Technologies B.V., 4612 PX Bergen op Zoom (NL)
(72) Inventor: SYBERT, Paul Dean, Mt Vernon, IN Indiana 47620 (US); CALVERAS, Jordi, Mt Vernon, IN Indiana 47620 (US); MAHOOD, James Alan, Mt Vernon, IN Indiana 47620 (US); HOOVER, James Franklin, Mt Vernon, IN Indiana 47620 (US)
(74) Representative: Modiano, Micaela Nadia

(56) References cited:
- US-A1- 2013 035 441
- NATHANIEL H. PARK ET AL: "Expanding the Cationic Polycarbonate Platform: Attachment of Sulfonium Moieties by Postpolymerization Ring Opening of Epoxides", ACS MACRO LETTERS, vol. 5, no. 11, 27 October 2016 (2016-10-27), pages 1247-1252, XP055591871, ISSN: 2161-1653, DOI: 10.1021/acsmacrolett.6b00705

## Description

### BACKGROUND

This disclosure is directed to endcapped polycarbonates, compositions including the endcapped polycarbonates, articles formed therefrom, and their methods of manufacture.

Polycarbonates are useful in the manufacture of articles and components for a wide range of applications, from automotive parts to electronic appliances. For example US 2013/035441 discloses a composition comprising bisphenol-A polycarbonate end-capped with a phenol or substituted phenol. Because of their broad use, particularly in automotive, lighting, and consumer electronics industries, it is desirable to provide polycarbonates with improved low color and color stability with heat aging. It would be a further advantage if the polycarbonates had good molding properties. As is known in the art, polycarbonates can be subject to increased color with molding. Use of higher levels of mold release agents to improve mold release can lead to plate out of the release agent in the molds. It would be a still further advantage if these properties could be obtained in polycarbonates with high thermal resistance, for example from 100 to 150°C, or higher.

### SUMMARY

An endcapped polycarbonate comprises thioether carbonyl endcaps of the formula -C(=O)-L-S-R, wherein L is a C₁₋₁₂ aliphatic or aromatic linking group, R is a C₁₋₂₀ alkyl, C₆₋₁₈ aryl, or C₇₋₂₄ arylalkylene.

A method for the manufacture of the endcapped polycarbonate comprises reacting a thioether carbonyl endcapping agent of the formula: G-C(=O)-L-S-R during manufacturing the polycarbonate from a bisphenol, wherein G is a leaving group, L is a C₁₋₁₂ aliphatic or aromatic linking group, and R is a C₁₋₂₀ alkyl, C₆₋₁₈ aryl, or C₇₋₂₄ arylalkylene.

A method of manufacturing an article that comprises the endcapped polycarbonate is disclosed, preferably wherein the manufacturing comprises injection molding or extruding the endcapped polycarbonate.

An article comprises the endcapped polycarbonate, preferably wherein the article is a molded article, an extruded layer, or an extruded fiber. In an aspect, the article can be an optical article such as a lens..

The above described and other features are exemplified by the following drawings, detailed description, examples, and claims.

### BRIEF DESCRIPTION OF THE DRAWINGS

The following is a brief description of the drawings which are exemplary.
FIG. 1 is a graph showing polycarbonate color as a function of thioether carbonyl endcap concentration under two different temperature/time conditions.
FIG. 2 is a graph showing color as a function of barrel temperature for a control and a polycarbonate containing 30 parts per million by weight (ppm) of sulfur.

### DETAILED DESCRIPTION

Polycarbonates having sulfur-containing endcaps, and in particular thioether carbonyl endcaps, are described herein. It has been unexpectedly found that such endcaps can provide polycarbonates that have improved properties, including one or more of low color (e.g., low yellowness index) during manufacture and improved color stability with heat aging. The polycarbonates can accordingly provide improved color for articles that are extruded, molded, or otherwise processed in the melt. The high temperature color stability also extends to the use of the article. These results are particularly unexpected in view of the teaching of US 9868817 B2, which discloses that the presence of sulfur in polycarbonates adversely impacts color and color stability, and JP 2006-028391 (02-02-2006), which discloses that low sulfur content in polycarbonates is important to obtain low color even in high heat polycarbonates.

The thioether carbonyl endcaps can be incorporated into high heat polycarbonates intended for use in high heat applications where color stability is difficult to achieve. For example, the thioether carbonyl endcaps can be used without significant loss of modulus, impact resistance, transmission, haze, chemical resistance, and ageing resistance.

In another unexpected feature, it has been found that the presence of the thioether carbonyl endcaps, and in particular those including C₆₋₁₄ alkyl substituents, provides improved mold release properties. Compositions including polycarbonates having the thioether carbonyl endcaps can be processed with less added mold release agent and therefore can have improved resistance to plate-out during injection molding, film extrusion, fiber extrusion, and the like.

The thioether endcaps can be derived from a sulfur-containing endcapping agent, and in particular can be a thioether carbonyl compound of formula (A) 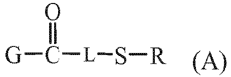 wherein G is leaving group, L is a C₁₋₁₂ aliphatic or aromatic linking group, and R is a C₁₋₂₀ alkyl, C₆₋₁₈ aryl, or C₇₋₂₄ alkylarylene, preferably a C₁₋₁₄ alkyl, C₆₋₁₂ aryl, or a C₇₋₁₃ arylalkylene. Preferably R is a C₆₋₁₄ alkyl. For example, G can be a halide, a hydroxy group (-OH), or a salt of a hydroxy group. For example, the salt can be an alkali metal or alkaline-earth metal salt, an ammonium salt, or the like. In another aspect, G of formula (A) can be of the formula -OR^{a} and the thioether carbonyl compound can be of formula (A1) 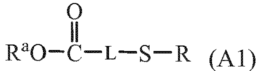 wherein R^{a} is a C₁₋₃ alkyl, C₆₋₁₈ aryl, C₇₋₂₄ alkylarylene, or C₇₋₂₄ arylalkylene, and L and R are as defined in formula (A), preferably wherein R is a C₆₋₁₄ alkyl.

The endcapping agent can be a thioether carbonyl compound (A2) or (A3): 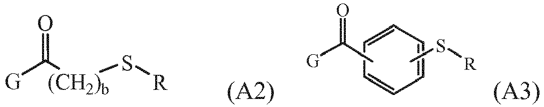 wherein R is a C₁₋₂₀ alkyl, C₆₋₁₈ aryl, or C₇₋₂₄ arylalkylene, preferably a C₁₋₁₄ alkyl, C₆₋₁₂ aryl, or a C₇₋₁₃ arylalkylene, b is 1 to 5, preferably 1 to 2, and G is as defined in formula (A). In an aspect R is C₆₋₁₄ alkyl, b is 1 to 5, preferably 1 to 2, and G is R^{a} as defined in formula A1, preferably C₁₋₃ alkyl.

For example, the endcapping agent can be a thioether carbonyl compound of formulas (B1) to (B5) 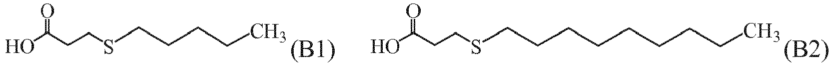 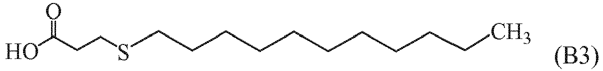 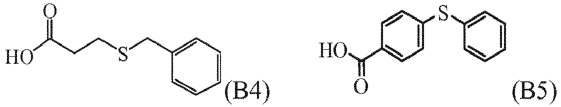 or a combination thereof.

The sulfur-containing endcapping agent can be used alone or in combination with other endcapping agents. More than one sulfur-containing endcapping agent can be used, such as 2, 3, or 4 or more different sulfur-containing endcapping agents.

The polycarbonates accordingly comprise thioether carbonyl endcaps of the formula -C(=O)-L-S-R, wherein L is a C₁₋₁₂ aliphatic or aromatic linking group and R is a C₁₋₂₀ alkyl, C₆₋₁₈ aryl, or C₇₋₂₄ arylalkylene. The endcaps can be of the formula 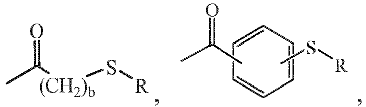 or a combination thereof, wherein R is a C₁₋₂₀ alkyl, C₆₋₁₈ aryl, or C₇₋₂₄ arylalkylene, preferably a C₁₋₁₄ alkyl, C₆₋₁₂ aryl, or a C₇₋₁₃ arylalkylene, and b is 1-5, preferably 1-2.

In another preferred aspect, the thioether carbonyl endcaps are of the formula 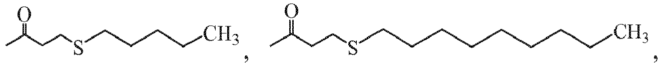 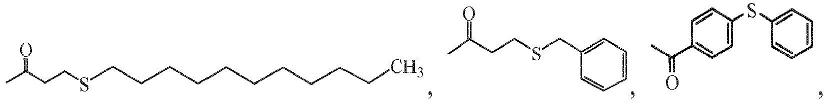 or a combination thereof.

"Polycarbonate" as used herein means a homopolycarbonate, copolycarbonate, or polycarbonate copolymer having repeating structural carbonate units of formula (1) 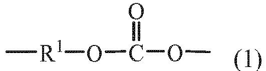 wherein at least 60 percent of the total number of R¹ groups are aromatic, or each R¹ contains at least one C₆₋₃₀ aromatic group. Specifically, each R¹ can be derived from a dihydroxy compound such as an aromatic dihydroxy compound of formula (2) or a bisphenol of formula (3): 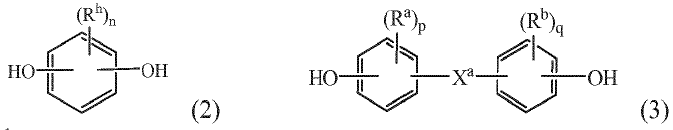 wherein each R^{h} is independently a halogen atom, for example bromine, a C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4.

In formula (3), R^{a} and R^{b} are each independently a halogen, C₁₋₁₂ alkoxy, or C₁₋₁₂ alkyl, and p and q are each independently integers of 0 to 4, such that when p or q is less than 4, the valence of each carbon of the ring is filled by hydrogen. For example, p and q can be 0, or p and q can be 1, and R^{a} and R^{b} can each be a C₁₋₃ alkyl group, specifically methyl, disposed meta to the hydroxy group on each arylene group. X^{a} is a bridging group connecting the two hydroxy-substituted aromatic groups, where the bridging group and the hydroxy substituent of each C₆ arylene group are disposed ortho, meta, or para (specifically para) to each other on the C₆ arylene group, for example, a single bond, -O-, -S-, -S(O)-, -S(O)₂-, -C(O)-, or a C₁₋₁₈ organic group, which can be cyclic or acyclic, aromatic or non-aromatic, and can further comprise heteroatoms such as halogens, oxygen, nitrogen, sulfur, silicon, or phosphorous. For example, X^{a} can be a substituted or unsubstituted C₃₋₁₈ cycloalkylidene; a C₁₋₂₅ alkylidene of the formula-C(R^{c})(R^{d}) - wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl; or a group of the formula-C(=R^{e})- wherein R^{e} is a divalent C₁₋₁₂ hydrocarbon group.

Polycarbonates and their methods of manufacture are known in the art, being described, for example, in WO 2013/175448 A1, US 2014/0295363, and WO 2014/072923. Examples of bisphenol compounds are described therein, and include, but are not limited to, Specific dihydroxy compounds include resorcinol, 2,2-bis(4-hydroxyphenyl) propane ("bisphenol A" or "BPA"), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), 1,1-bis(4-hydroxy-3-methylphenyl)cyclohexane, and 1,1-bis(4-hydroxyphenyl)-3,3,5-trimethylcyclohexane (isophorone bisphenol).

Preferably, the bisphenol is substantially free of halogen substituents. For example, the bisphenol can have less than 100 ppm, more preferably less than 50 ppm, and even more preferably less than 5 ppm of chlorine, bromine, and iodine.

The polycarbonate can be a high heat polycarbonate. The high heat polycarbonates comprise high heat aromatic dihydroxy monomer groups as described in more detail below. The high heat polycarbonates can comprise only high heat aromatic dihydroxy monomer groups, but more commonly are copolycarbonates comprising a combination of low heat aromatic dihydroxy monomer groups and high heat aromatic dihydroxy monomer groups.

The low heat aromatic dihydroxy monomer groups are derived from a low heat aromatic dihydroxy monomer of formula (3) and have from 12 to 18 carbon atoms. As used herein, a "low heat aromatic dihydroxy monomer" means a compound that can be used to manufacture a polycarbonate homopolymer having a Tg of less than 170°C, for example 120-160°C, each as determined by differential scanning calorimetry (DSC) as per ASTM D3418 with a 20°C/min heating rate. A preferred low heat dihydroxy monomer is bisphenol A.

The high heat aromatic dihydroxy monomer groups include specific monomers having 19 or more carbon atoms. Thus, in formula (1), each R¹ is independently (a) a C₁₂₋₁₈ low heat divalent bisphenol group or (b) a C₁₉ or higher divalent bisphenol group derived from a high heat monomer as further described below. In an aspect, each R¹ independently consists essentially, or consist of, (a) a bisphenol A divalent group and (b) the C₁₉ or higher divalent group derived from a high heat monomer.

The high heat aromatic dihydroxy monomer group is derived from a high heat aromatic dihydroxy monomer having at least 19 carbon atoms. As used herein, a high heat aromatic dihydroxy monomer is a monomer where the corresponding homopolycarbonate of the monomer has a glass transition temperature (Tg) of 170°C or higher, for example a Tg of 175-330°C, each determined by differential scanning calorimetry (DSC) as per ASTM D3418 with a 20°C/min heating rate. Examples of such high heat aromatic dihydroxy monomer groups include groups of formulas (4) to (10) 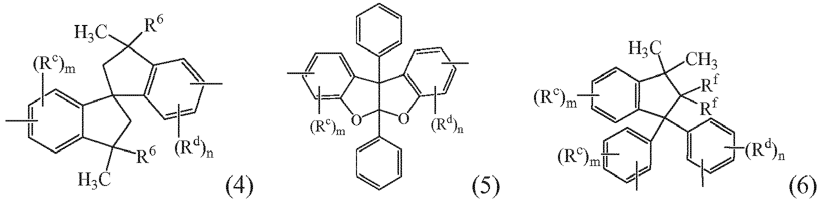 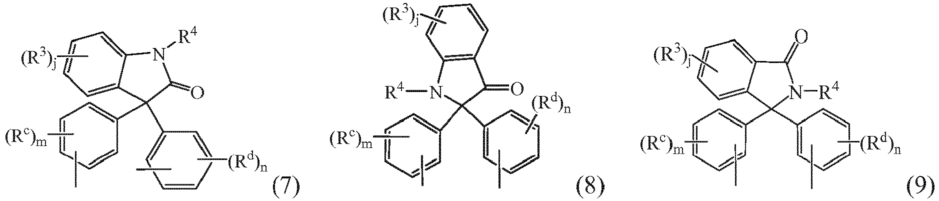 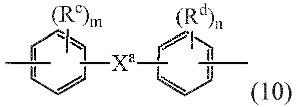 wherein R^{c} and R^{d} are each independently a C₁₋₁₂ alkyl, C₂₋₁₂ alkenyl, C₃₋₈ cycloalkyl, or C₁₋₁₂ alkoxy, each R^{f} is hydrogen or both R_{f}together are a carbonyl group, each R³ is independently C₁₋₆ alkyl, R⁴ is hydrogen, C₁₋₆ alkyl, or phenyl optionally substituted with 1 to 5 C₁₋₆ alkyl groups, R⁶ is independently C₁₋₃ alkyl, or phenyl, preferably methyl, X^{a} is a C₆₋₁₂ polycyclic aryl, C₃₋₁₈ mono- or polycycloalkylene, C₃₋₁₈ mono- or polycycloalkylidene, -C(R^{f})(R^{g})- wherein R^{f} is hydrogen, C₁₋₁₂ alkyl, or C₆₋₁₂ aryl and R^{g} is C₆₋₁₀ alkyl, C₆₋₈ cycloalkyl, or C₆₋₁₂ aryl, or-(Q^{a})ₓ-G-(Q^{b})_{y}- group, wherein Q^{a} and Q^{b} are each independently a C₁₋₃ alkylene, G is a C₃₋₁₀ cycloalkylene, x is 0 or 1, and y is 0 or 1, and j, m, and n are each independently 0 to 4. A combination of high heat aromatic dihydroxy monomer groups can be used.

For example, R^{c} and R^{d} can be each independently a C₁₋₃ alkyl, or C₁₋₃ alkoxy, each R⁶ can be methyl, each R³ can be independently C₁₋₃ alkyl, R⁴ can be methyl, or phenyl, each R⁶ can be independently C₁₋₃ alkyl, or phenyl, preferably methyl, X^{a} can be a C₆₋₁₂ polycyclic aryl, C₃₋₁₈ mono- or polycycloalkylene, C₃₋₁₈ mono- or polycycloalkylidene,-C(R^{f})(R^{g})- wherein R^{f} can be hydrogen, C₁₋₁₂ alkyl, or C₆₋₁₂ aryl, and R^{g} can be C₆₋₁₀ alkyl, C₆₋₈ cycloalkyl, or C₆₋₁₂ aryl, or -(Q¹)ₓ-G-(Q²)_{y}- group, wherein Q¹ and Q² can each independently be a C₁₋₃ alkylene and G can be a C₃₋₁₀ cycloalkylene, x can be 0 or 1, and y can be 0 or 1, and j, m, and n can each independently be 0 or 1.

Exemplary high heat aromatic dihydroxy monomer groups include those of formulas (5a), (6a), (9a), and (10a) to (101) 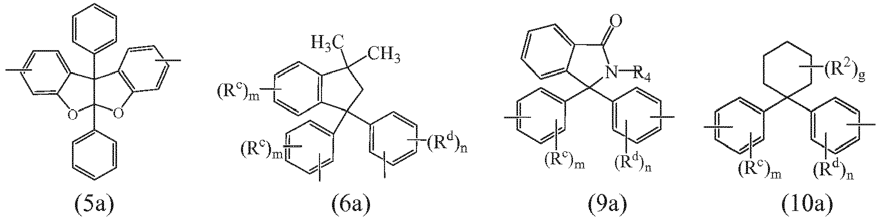 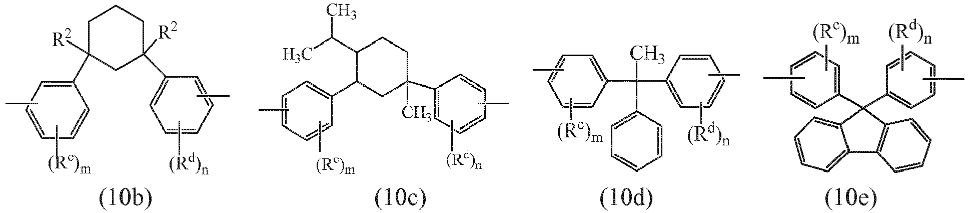 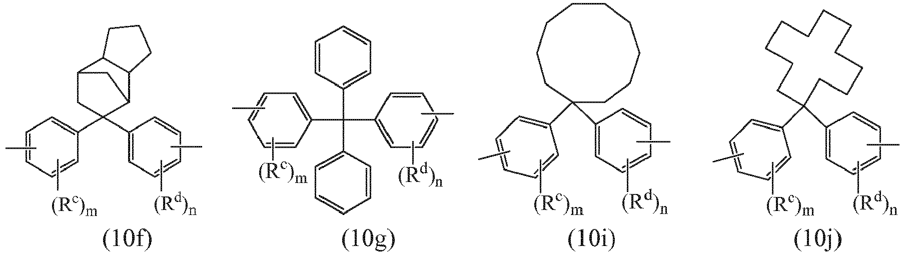 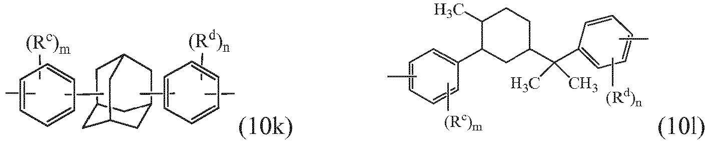 wherein R^{c} and R^{d} are the same as defined for formulas (4) to (10), each R² is independently C₁₋₄ alkyl, m and n are each independently 0 to 4, each R³ is independently C₁₋₄ alkyl or hydrogen, R⁴ is C₁₋₆ alkyl or phenyl optionally substituted with 1 to 5 C₁₋₆ alkyl groups, and g is 0 to 10. In a specific aspect each bond of the bisphenol group is located para to the linking group that is X^{a}. In an aspect, R^{c} and R^{d} are each independently a C₁₋₃ alkyl, or C₁₋₃ alkoxy, each R² is methyl, x is 0 or 1, y is 1, and m and n are each independently 0 or 1.

The high heat aromatic dihydroxy monomer group is preferably of formula (9a-2) or (10a-2) 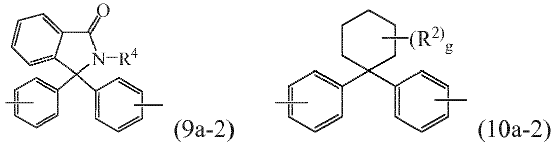 wherein R⁴ is methyl or phenyl, each R² is methyl, and g is 1 to 4.

Preferably, the high heat aromatic group is derived from the corresponding bisphenol, in particular from 3,8-dihydroxy-5a,10b-diphenyl-coumarano-2',3',2,3-coumarane, 4,4'-(3,3-dimethyl-2,2-dihydro-1H-indene-1,1-diyl)diphenol , 2-phenyl-3,3'-bis(4-hydroxyphenyl) phthalimidine (PPPBP), 1,1-bis(4-hydroxyphenyl)-3,3,5-trimethyl-cyclohexane, 4,4'-(1-phenylethylidene)bisphenol, 9,9-bis(4-hydroxyphenyl)fluorene, 1,1-bis(4-hydroxyphenyl)cyclododecane, or a combination thereof. More preferably, the high heat aromatic dihydroxy monomer group is derived from PPPBP, BPI, or a combination thereof.

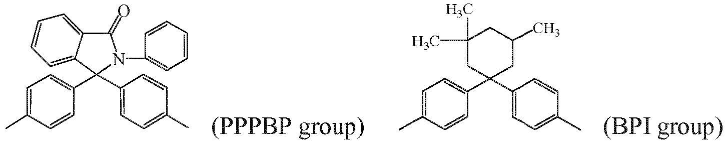

The C₁₉ or higher divalent group is present in an amount of 5 to 100 mol%, preferably 10 to 95 mol%, more preferably 20 to 85 mol%, based on the total moles of the bisphenol groups in the endcapped polycarbonate. The low heat aromatic dihydroxy monomer groups are present in an amount of 0 to 95 mol%, preferably 5 to 90 mol%, more preferably 15 to 80 mol%, based on the total moles of the bisphenol groups in the endcapped polycarbonate. In an aspect the , the high heat carbonate group is derived from PPPBP, BPI, or a combination thereof, and the low carbonate group is derived from bisphenol A.

In contrast to the teachings of the prior art, the inventors have found that polycarbonates containing sulfur can have improved properties such as transparency, provided that the source of the sulfur is present in the endcapping agents as described herein. This sulfur is referred to herein as "added sulfur", and excludes any contaminant sulfur present in the components used in the manufacture of the copolycarbonates, i.e., the high heat aromatic dihydroxy monomer, the low heat aromatic dihydroxy monomer, and the carbonate source, for example. Nonetheless, it can be advantageous to minimize or eliminate contaminant sulfur from these sources. Accordingly, in an aspect the high heat aromatic dihydroxy monomer and the low heat aromatic dihydroxy monomer each have a sulfur content of less than 5 parts per million by weight (ppm) based on the parts by weight of the polycarbonate. In another aspect, the low heat aromatic dihydroxy monomer and the high heat aromatic dihydroxy monomer each have a purity of at least 99.6%, at least 99.7%, or at least 99.8% as determined by HPLC and a sulfur content of less than 5 ppm based on the parts by weight of the polycarbonate. In a preferred aspect, the low heat aromatic dihydroxy monomer and the high heat aromatic dihydroxy monomer each can have a purity of at least 99.8% and a sulfur content of less than 5 ppm based on the parts by weight of the polycarbonate.

As stated above, "polycarbonates" includes homopolycarbonates (wherein each R¹ in the polymer is the same). "Copolycarbonates" include copolymers comprising at least two different R¹ moieties in the carbonate units, and polycarbonate copolymers comprise carbonate units and other types of polymer units, such as ester units or siloxane units (e.g., polycarbonate polysiloxane copolymers, polyester-polycarbonates, isosorbide-containing polycarbonates).

A specific type of polycarbonate copolymer is a poly(ester-carbonate), also known as a polyester-polycarbonate. Poly(ester-carbonate)s further contain, in addition to recurring carbonate chain units of formula (1), repeating ester units of formula (11) 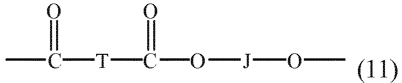 wherein J is a divalent group derived from a dihydroxy compound (which includes a reactive derivative thereof), and can be, for example, a C₁₋₁₀ alkylene, a C₆₋₂₀ cycloalkylene, a C₅₋₂₀ arylene, or a polyoxyalkylene group in which the alkylene groups contain 2 to 6 carbon atoms, specifically, 2, 3, or 4 carbon atoms; and T is a divalent group derived from a dicarboxylic acid (which includes a reactive derivative thereof), and can be, for example, a C₁₋₂₀ alkylene, a C₅₋₂₀ cycloalkylene, or a C₆₋₂₀ arylene. Copolyesters containing a combination of different T or J groups can be used. The polyester units can be branched or linear.

Specific dihydroxy compounds include aromatic dihydroxy compounds of formula (2) (e.g., resorcinol), bisphenols of formula (3) (e.g., bisphenol A), a C₁₋₈ aliphatic diol such as ethane diol, n-propane diol, i-propane diol, 1,4-butane diol, 1,4-cyclohexane diol, 1,4-hydroxymethylcyclohexane, or a combination thereof. Aliphatic dicarboxylic acids that can be used include C₅₋₂₀ aliphatic dicarboxylic acids (which includes the terminal carboxyl groups), specifically linear C₈₋₁₂ aliphatic dicarboxylic acid such as decanedioic acid (sebacic acid); and alpha, omega-C₁₂ dicarboxylic acids such as dodecanedioic acid (DDDA). Aromatic dicarboxylic acids that can be used include terephthalic acid, isophthalic acid, naphthalene dicarboxylic acid, 1,4-cyclohexane dicarboxylic acid, or a combination thereof. A combination of isophthalic acid and terephthalic acid wherein the weight ratio of isophthalic acid to terephthalic acid is 91:9 to 2:98 can be used.

Specific ester units include ethylene terephthalate units, n-propylene terephthalate units, n-butylene terephthalate units, ester units derived from isophthalic acid, terephthalic acid, and resorcinol (ITR ester units), and ester units derived from sebacic acid and bisphenol A. The molar ratio of ester units to carbonate units in the poly(ester-carbonate)s can vary broadly, for example 1:99 to 99:1, specifically, 10:90 to 90:10, more specifically, 25:75 to 75:25, or from 2:98 to 15:85. The molar ratio of ester units to carbonate units in the poly(ester-carbonate)s can vary from 1:99 to 30: 70, specifically 2:98 to 25:75, more specifically 3:97 to 20:80, or from 5:95 to 15:85.

The endcapped polycarbonate copolymer can be a poly(carbonate-siloxane), also referred to in the art as a polycarbonate-polysiloxane copolymer. The polysiloxane blocks comprise repeating diorganosiloxane units as in formula (12) 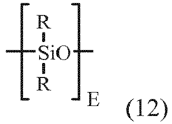 wherein each R is independently a C₁₋₁₃ monovalent organic group. For example, R can be a C₁₋₁₃ alkyl, C₁₋₁₃ alkoxy, C₂₋₁₃ alkenyl, C₂₋₁₃ alkenyloxy, C₃₋₆ cycloalkyl, C₃₋₆ cycloalkoxy, C₆₋₁₄ aryl, C₆₋₁₀ aryloxy, C₇₋₁₃ arylalkyl, C₇₋₁₃ arylalkyleneoxy, C₇₋₁₃ alkylarylene, or C₇₋₁₃ alkylaryleneoxy. The foregoing groups can be fully or partially halogenated with fluorine, chlorine, bromine, or iodine, or a combination thereof. Where a transparent poly(carbonate-siloxane) is desired, R can be unsubstituted by halogen. Combinations of the foregoing R groups can be used in the same copolymer.

The value of E in formula (12) can vary widely depending on the type and relative amount of each component in the thermoplastic composition, the desired properties of the composition, and like considerations. Generally, E has an average value of 2 to 1,000, specifically 2 to 500, 2 to 200, or 2 to 125, 5 to 80, or 10 to 70. For example, E can have an average value of 10 to 80 or 10 to 40, or E can have an average value of 40 to 80, or 40 to 70. Where E is of a lower value, e.g., less than 40, it can be desirable to use a relatively larger amount of the poly(carbonate-siloxane) copolymer. Conversely, where E is of a higher value, e.g., greater than 40, a relatively lower amount of the poly(carbonate-siloxane) copolymer can be used.

The polysiloxane blocks can be of formula (13) 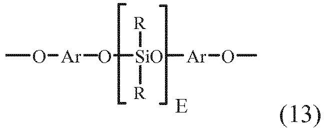 wherein E and R are as defined in formula (12) and Ar can be the same or different, and is a substituted or unsubstituted C₆₋₃₀ arylene, wherein the bonds are directly connected to an aromatic moiety. Ar groups in formula (13) can be derived from a C₆₋₃₀ dihydroxyarylene compound, for example a dihydroxyarylene compound of formula (3) or (6) above. Dihydroxyarylene compounds include 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), 1,1-bis(4-hydroxy-t-butylphenyl) propane, or a combination thereof.

The polysiloxane blocks can be of formula (14) 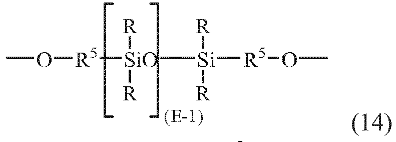 wherein R and E are as described above, and each R⁵ is independently a divalent C₁₋₃₀ organic group, and wherein the polymerized polysiloxane unit is the reaction residue of its corresponding dihydroxy compound. For example, the polysiloxane blocks can be of formula (15): 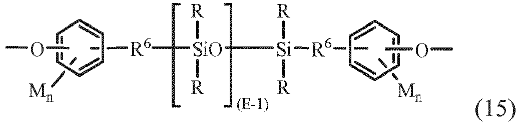 wherein R and E are as defined in formula (12). R⁶ in formula (14) is a divalent C₂₋₈ aliphatic. Each M in formula (15) can be the same or different, and can be a halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ aralkyl, C₇₋₁₂ arylalkyleneoxy, C₇₋₁₂ alkylarylene, or C₇₋₁₂ alkylaryleneoxy, wherein each n is independently 0, 1, 2, 3, or 4.

In Formula (15), M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In another example, R is methyl, or a combination of methyl and trifluoropropyl, or a combination of methyl and phenyl. In still another example, R is methyl, M is methoxy, n is one, and R6 is a divalent C₁₋₃ aliphatic group. Specific polysiloxane blocks can be of the formula 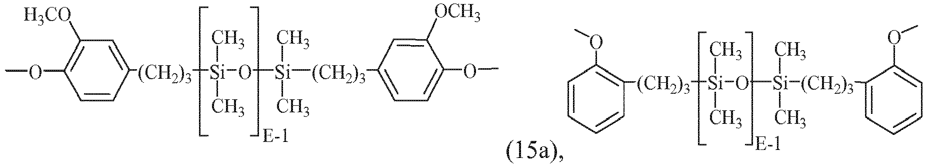 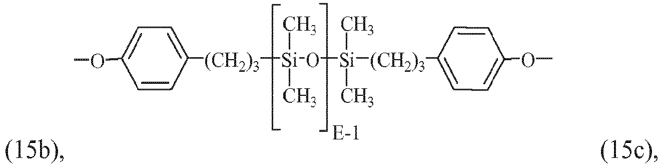 or a combination thereof, wherein E can have an average value of 2 to 200, 2 to 125, 5 to 125, 5 to 100, 5 to 50, 20 to 80, or 5 to 20.

Blocks of formula (15) can be derived from the corresponding dihydroxy polysiloxane, which in turn can be prepared effecting a platinum-catalyzed addition between the siloxane hydride and an aliphatically unsaturated monohydric phenol such as eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. The poly(carbonate-siloxane) copolymers can then be manufactured, for example, by the synthetic procedure of European Patent Application Publication No. 0 524 731 A1 of Hoover, page 5, Preparation 2.

Transparent poly(carbonate-siloxane) copolymers comprise carbonate units (1) derived from bisphenol A, and repeating siloxane units (14a), (14b), (14c), or a combination thereof (specifically of formula 14a), wherein E has an average value of 4 to 50, 4 to 15, specifically 5 to 15, more specifically 6 to 15, and still more specifically 7 to 10. The transparent copolymers can be manufactured using one or both of the tube reactor processes described in U.S. 2004/0039145A1 or the process described in U.S. 6,723,864 can be used to synthesize the poly(carbonate-siloxane) copolymers.

The poly(carbonate-siloxane) copolymers can comprise 50 to 99 weight percent (wt%) of carbonate units and 1 to 50 wt% siloxane units. Within this range, the siloxane-polycarbonate copolymer can comprise 70 to 98 wt%, more specifically 75 to 97 wt% of carbonate units and 2 to 30 wt%, more specifically 3 to 25 wt% siloxane units.

The copolycarbonate can be prepared from substantially pure starting materials. The low heat aromatic dihydroxy monomer, the high heat aromatic dihydroxy monomer, and the siloxane each can have a purity of at least 99.6%, at least 99.7%, or at least 99.8% as determined by high performance liquid chromatography (HPLC). In an aspect, the high heat aromatic dihydroxy monomer can have a purity of 99.8% or greater. In an aspect, the low heat aromatic dihydroxy monomer can have a purity of 99.8% or greater. In an aspect, the siloxane monomers can have a purity of 99.8% or greater. In a preferred aspect, the high heat aromatic dihydroxy monomer and the low heat aromatic dihydroxy monomer each can have a purity of 99.8% or greater.

The polycarbonates can be manufactured by processes such as interfacial polymerization and melt polymerization. High Tg copolycarbonates are generally manufactured using interfacial polymerization. Although the reaction conditions for interfacial polymerization can vary, an exemplary process generally involves dissolving or dispersing a dihydroxy compound in aqueous NaOH or KOH, adding the resulting mixture to a water-immiscible solvent, and contacting the reactants with a carbonate precursor in the presence of a catalyst such as, for example, a tertiary amine or a phase transfer catalyst, under controlled pH conditions, e.g., 8 to 10.

The aqueous NaOH or KOH preferably contains less than 20 ppm of chlorates. WO 2017/037637 A1 discloses the chlorination of the monomers and/or polymer backbone by chlorate during the interfacial polymerization process, resulting in increased color and decreased color stability. Preferably, the aqueous NaOH or KOH is substantially free of metal ions, for example containing less than 2 ppm of iron.

The water-immiscible solvent can be, for example, methylene chloride, 1,2-dichloroethane, chlorobenzene, toluene, or the like.

Exemplary carbonate precursors include a carbonyl halide such as carbonyl bromide or carbonyl chloride (phosgene) a bishaloformate of a dihydroxy compound (e.g., the bischloroformate of bisphenol A, hydroquinone ethylene glycol, neopentyl glycol, or the like), and diaryl carbonates. Combinations of carbonate precursors can also be used. The diaryl carbonate ester can be diphenyl carbonate, or an activated diphenyl carbonate having electron-withdrawing substituents on each aryl, such as bis(4-nitrophenyl)carbonate, bis(2-chlorophenyl)carbonate, bis(4-chlorophenyl)carbonate, bis(methyl salicyl)carbonate, bis(4-methylcarboxylphenyl) carbonate, bis(2-acetylphenyl) carboxylate, bis(4-acetylphenyl) carboxylate, or a combination thereof.

In the manufacture of poly(ester-carbonate)s by interfacial polymerization, rather than using the dicarboxylic acid or diol directly, the reactive derivatives of the diacid or diol, such as the corresponding acid halides, in particular the acid dichlorides and the acid dibromides can be used. Thus, for example instead of using isophthalic acid, terephthalic acid, or a combination thereof, isophthaloyl dichloride, terephthaloyl dichloride, or a combination thereof can be used.

Among tertiary amines that can be used as catalysts in interfacial polymerization are aliphatic tertiary amines such as triethylamine and tributylamine, cycloaliphatic tertiary amines such as N,N-diethyl-cyclohexylamine, and aromatic tertiary amines such as N,N-dimethylaniline. Among the phase transfer catalysts that can be used are catalysts of the formula (R³)₄Q⁺X, wherein each R³ is the same or different, and is a C₁₋₁₀ alkyl; Q is a nitrogen or phosphorus atom; and X is a halogen atom or a C₁₋₈ alkoxy or C₆₋₁₈ aryloxy. Exemplary phase transfer catalysts include (CH₃(CH₂)₃)₄NX, (CH₃(CH₂)₃)₄PX, (CH₃(CH₂)₅)₄NX, (CH₃(CH₂)₆)₄NX, (CH₃(CH₂)₄)₄NX, CH₃(CH₃(CH₂)₃)₃NX, and CH₃(CH₃(CH₂)₂)₃NX, wherein X is Cl⁻, Br⁻, a C₁₋₈ alkoxy or a C₆₋₁₈ aryloxy. An effective amount of a phase transfer catalyst can be 0.1 to 10 wt%, or 0.5 to 2 wt%, each based on the weight of dihydroxy compound in the phosgenation mixture.

Alternatively, melt processes can be used to make the polycarbonates. In the melt polymerization process, polycarbonates or polycarbonate copolymers can generally be prepared by co-reacting, in a molten state, a dihydroxy reactant as described above and a diaryl carbonate ester as described above in the presence of a transesterification catalyst. Conditions for melt process are described, for example, in WO2013/027165 and the references cited therein. Catalysts used in the melt polymerization can include an alpha catalyst and a beta catalyst. Alpha catalysts can comprise a source of alkali or alkaline earth ions and are typically more thermally stable and less volatile than beta catalysts. Beta catalysts are typically volatile and degrade at elevated temperatures and can comprise a tranesterification catalyst of the formula (R³)₄Q X as described above. Beta catalysts are therefore preferred for use at early low-temperature polymerization stages. The alpha catalyst can be used in an amount sufficient to provide 1 × 10⁻² to 1 × 10⁻⁸ moles, specifically, 1 × 10⁻⁴ to 1 × 10⁻⁷ moles of metal per mole of the dihydroxy compounds used. The amount of beta catalyst (e.g., organic ammonium or phosphonium salts) can be 1 × 10⁻² to 1 × 10⁻⁵, specifically 1 × 10⁻³ to 1 × 10⁻⁴ moles per total mole of the dihydroxy compounds in the reaction mixture. Quenching of the transesterification catalysts and any reactive catalysts residues with an acidic compound after polymerization is completed can also be useful in some melt polymerization processes. Among the many quenchers that can be used are alkyl sulfonic esters of the formula R⁸SO₃R⁹ wherein R⁸ is hydrogen, C₁₋₁₂ alkyl, C₆₋₁₈ aryl, or C₇₋₁₉ alkylarylene, and R⁹ is C₁₋₁₂ alkyl, C₆₋₁₈ aryl, or C₇₋₁₉ alkylarylene (e.g., benzenesulfonate, p-toluenesulfonate, methylbenzene sulfonate, ethylbenzene sulfonate, n-butyl benzenesulfonate, octyl benzenesulfonate and phenyl benzenesulfonate, methyl p-toluenesulfonate, ethyl p-toluenesulfonate, n-butyl p-toluene sulfonate, octyl p-toluenesulfonate and phenyl p-toluenesulfonate, in particular alkyl tosylates such as n-butyl tosylate).

As described above, the thioether carbonyl endcapping agent is included during polymerization to provide at least a portion of the end groups to an endcapped polycarbonate. For example, the thioether carbonyl endcapping agent is reacted during manufacturing the polycarbonate from a bisphenol. The thioether carbonyl endcapping agent can be combined with the bisphenol during manufacturing the bisphenol, before storing the bisphenol, before transporting the bisphenol, during dissolution of the bisphenol in a solvent or basic solution before manufacturing the polycarbonate, at the same time that the bisphenol is added to a reaction mixture to form the polycarbonate, or during phosgenation to form the polycarbonate. Branched polycarbonate blocks can be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxyphenylethane, isatinbis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05 to 2.0 wt%. Combinations comprising linear polycarbonates and branched polycarbonates can be used.

The thioether carbonyl endcaps can be incorporated into the endcapped polycarbonate in an amount effective for the thioether carbonyl endcaps to provide 3 to 80 ppm, or 3 to 70, or 5 to 70 ppm, preferably 5 to 50 ppm, more preferably 10 to 50 ppm of added sulfur, each based on the total parts by weight of the endcapped polycarbonate. In some aspects the endcapped polycarbonate can have a total sulfur content of 3 to 150 ppm, or 3 to 100 ppm, preferably 5 to 100 ppm, or 3 to 70 ppm, or 5 to 50 ppm, more preferably 10 to 50 ppm, each based on the total parts by weight of the endcapped polycarbonate. For example, the total sulfur content can be 3 to 50 ppm, or 5 to 50 ppm. The total sulfur content can be measured as provided below and includes the amount of sulfur from the thioether carbonyl endcaps and other sources (e.g., starting materials, solvents, byproducts, or the like.

Additional endcapping agents can be included, for example monocyclic phenols such as phenol and C₁₋₂₂ alkyl-substituted phenols such as p-cumyl-phenol (PCP), resorcinol monobenzoate, and p-and tertiary-butyl phenol, monoethers of diphenols, such as p-methoxyphenol, and alkyl-substituted phenols with branched chain alkyl substituents having 8 to 9 carbon atoms, 4-substituted-2-hydroxybenzophenones and their derivatives, aryl salicylates, monoesters of diphenols such as resorcinol monobenzoate, 2-(2-hydroxyaryl)-benzotriazoles and their derivatives, 2-(2-hydroxyaryl)-1,3,5-triazines and their derivatives, mono-carboxylic acid chlorides such as benzoyl chloride, C₁₋₂₂ alkyl-substituted benzoyl chloride, toluoyl chloride, bromobenzoyl chloride, cinnamoyl chloride, and 4-nadimidobenzoyl chloride, polycyclic, mono-carboxylic acid chlorides such as trimellitic anhydride chloride, and naphthoyl chloride, functionalized chlorides of aliphatic monocarboxylic acids, such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups can be used.

The endcapped polycarbonate can have a weight average molecular weight (Mw) of 10,000 to 200,000 grams per mole (g/mol), specifically 18,000 to 100,000 g/mol, as measured by gel permeation chromatography (GPC), using a crosslinked styrene-divinylbenzene column and calibrated to bisphenol A homopolycarbonate references. GPC samples are prepared at a concentration of 1 mg per ml and are eluted at a flow rate of 1.5 ml per minute.

The endcapped polycarbonate can have a melt volume flow rate (MVR) of 2 to 300 cm³/10 min, 2 to 100 cm³/10 min, 2 to 30 cm³/10 min, using the ISO 1133 method, 2.16 kg load, 330° C. temperature, 360 second dwell.

The endcapped polycarbonate can have at least one of lower color, lower color after heat aging, or less plate-out after molding compared to the same polycarbonate without the thioether carbonyl endcaps.

Also provided are thermoplastic compositions including the endcapped polycarbonate.

The thermoplastic composition can further include an impact modifier. Examples of impact modifiers include natural rubber, fluoroelastomers, ethylene-propylene rubber (EPR), ethylene-butene rubber, ethylene-propylene-diene monomer rubber (EPDM), acrylate rubbers, hydrogenated nitrile rubber (HNBR), silicone elastomers, styrene-butadiene-styrene (SBS), styrene-butadiene rubber (SBR), styrene-(ethylene-butene)-styrene (SEBS), acrylonitrile-butadiene-styrene (ABS), acrylonitrile-ethylene-propylene-diene-styrene (AES), styreneisoprene-styrene (SIS), styrene-(ethylene-propylene)-styrene (SEPS), methyl methacrylate-butadiene-styrene (MBS), high rubber graft (HRG), and the like.

An additive composition can be used, comprising one or more additives selected to achieve a desired property, with the proviso that the additive(s) are also selected so as to not significantly adversely affect a desired property of the thermoplastic composition. The additive composition or individual additives can be mixed at a suitable time during the mixing of the components for forming the composition. The additive can be soluble or non-soluble in polycarbonate. The additive composition can include an impact modifier, flow modifier, filler (e.g., a particulate polytetrafluoroethylene (PTFE), glass, carbon, mineral, or metal), reinforcing agent (e.g., glass fibers), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g, a dye or pigment), surface effect additive, radiation stabilizer, flame retardant, anti-drip agent (e.g., a PTFE-encapsulated styrene-acrylonitrile copolymer (TSAN)), or a combination comprising one or more of the foregoing. For example, a combination of a heat stabilizer, mold release agent, and ultraviolet light stabilizer can be used. In general, the additives are used in the amounts generally known to be effective. For example, the total amount of the additive composition (other than any impact modifier, filler, or reinforcing agent) can be 0.001 to 10.0 wt%, or 0.01 to 5 wt%, each based on the total weight of the polymer in the composition.

In some aspects, the thermoplastic compositions can further include a sulfonic acid stabilizer also referred to herein as an "organosulfonic stabilizer". The organosulfonic stabilizer can be an aryl or aliphatic sulfonic acid, including a polymer thereof, an aryl or an aliphatic sulfonic acid anhydride, or an aryl or aliphatic ester of an aryl or aliphatic sulfonic acid, or a polymer thereof. In particular, the organosulfonic stabilizer is a C₁₋₃₀ alkyl sulfonic acid, a C₆₋₃₀ aryl sulfonic acid, a C₇₋₃₀ alkylarylene sulfonic acid, a C₇₋₃₀ arylalkylene sulfonic acid, or an aromatic sulfonic acid polymer; an anhydride of a C₁₋₃₀ alkyl sulfonic acid, a C₆₋₃₀ aryl sulfonic acid, a C₇₋₃₀ alkylarylene sulfonic acid, or a C₇₋₃₀ arylalkylene sulfonic acid; or a C₆₋₃₀ aryl ester of: a C₁₋₃₀ alkyl sulfonic acid, a C₆₋₃₀ aryl sulfonic acid, a C₇₋₃₀ alkylarylene sulfonic acid, a C₇₋₃₀ arylalkylene sulfonic acid, or an aromatic sulfonic acid polymer; or a C₁₋₃₀ aliphatic ester of: a C₁₋₃₀ alkyl sulfonic acid, a C₆₋₃₀ aryl sulfonic acid, a C₇₋₃₀ alkylarylene sulfonic acid, a C₇₋₃₀ arylalkylene sulfonic acid, or an aromatic sulfonic acid polymer. A combination of one or more of the foregoing can be used.

In an aspect, the organosulfonic stabilizer is of formula (8). 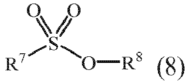 In formula (8), R⁷ is each independently a C₁₋₃₀ alkyl, C₆₋₃₀ aryl, C₇₋₃₀ alkylarylene, C₇₋₃₀ arylalkylene, or a polymer unit derived from a C₂₋₃₂ ethylenically unsaturated aromatic sulfonic acid or its corresponding C₁₋₃₂ alkyl ester. The C₂₋₃₂ ethylenically unsaturated aromatic sulfonic acid can be of the formula 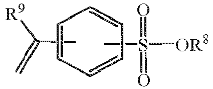 wherein R⁹ is hydrogen or methyl and R⁸ is as defined in formula (8). Preferably the ethylenically unsaturated group and the sulfonic acid or ester group are located para on the phenyl ring.

Further in formula (8), R⁸ is hydrogen; or R⁸ is C₁₋₃₀ alkyl; or R⁸ is a group of the formula -S(=O)₂-R⁷. When R⁸ is a group of the formula -S(=O)₂-R⁷, each R⁷ in the compound of formula (8) can be the same or different, but preferably each R⁷ is the same.

In an aspect in formula (8), R⁷ is a C₆₋₁₂ aryl, C₇₋₂₄ alkylarylene, or a polymer unit derived from a C₂₋₁₄ ethylenically unsaturated aromatic sulfonic acid or its ester; and R⁸ is hydrogen, C₁₋₂₄ alkyl, or a group of the formula -S(=O)₂-R⁷ wherein R⁷ is a C₆₋₁₂ aryl or C₇₋₂₄ alkylarylene. In another aspect in formula (8), R⁷ is a C₇₋₁₀ alkylarylene or a polymer unit derived from a C₂₋₁₄ ethylenically unsaturated aromatic sulfonic acid, and R⁸ is a hydrogen, C₁₋₂₅ alkyl, or a group of the formula -S(=O)₂-R⁷ wherein R⁷ is a C₇₋₁₀ alkylarylene. In still another aspect, R⁷ is a C₇₋₁₀ alkylarylene and R⁸ is a hydrogen or C₁₋₆ alkyl. In still another aspect, R⁷ is a C₇₋₁₀ alkylarylene and R⁸ is a hydrogen or C₁₂₋₂₅ alkyl, or R⁸ is a C₁₄₋₂₀ alkyl. In another aspect, R⁷ is a polymer unit derived from a C₂₋₁₄ ethylenically unsaturated aromatic sulfonic acid, preferably p-styrene sulfonic acid or para-methyl styrene sulfonic acid, such that in formula (8) R⁸ is hydrogen.

The organosulfonic stabilizer can be a C₁₋₁₀ alkyl ester of a C₇₋₁₂ alkylarylene sulfonic acid, preferably of p-toluene sulfonic acid. More preferably the stabilizer is a C₁₋₆ alkyl ester of p-toluene sulfonic acid, such as butyl tosylate. In another aspect, the organosulfonic stabilizer is an anhydride of a C₇₋₁₂ alkylarylene sulfonic acid, preferably para-toluene sulfonic anhydride. In still another aspect, R⁷ is a C₁₁₋₂₄ alkylarylene sulfonic acid, and R⁸ is hydrogen. Alternatively, R⁷ is a C₁₆₋₂₂ alkylarylene sulfonic acid, and R⁸ is hydrogen.

When present, the amount of the organosulfonic stabilizer used can be that amount effective to provide 2-40 ppm, or 2-20 ppm, or 4-15 ppm, or 4-10 ppm, or 4-8 ppm of added sulfur, i.e., organosulfonic stabilizer-added sulfur, to the polycarbonates, each based on parts by weight of the polycarbonate. When the organosulfonic stabilizer is present, a lower amount of the sulfur-containing, endcaps can be used to obtain the desired total added sulfur content. When the organosulfonic stabilizer is present, the total added sulfur content (the added sulfur from the sulfur-containing endcaps and the organosulfonic stabilizer) can be 7-100 ppm, or 10-100 ppm, or 15-100 ppm, or 15-50 ppm, or 17-100 ppm, or 17-50 ppm, or 10-50 ppm, or 10-25 ppm, or 10-20 ppm, each based on the total parts by weight of the polycarbonate.

The thermoplastic compositions can be manufactured by various methods known in the art. For example, powdered polycarbonate, and other optional components are first blended, optionally with any fillers, in a high-speed mixer or by hand mixing. The blend is then fed into the throat of a twin-screw extruder via a hopper. Alternatively, at least one of the components can be incorporated into the composition by feeding it directly into the extruder at the throat or downstream through a sidestuffer, or by being compounded into a masterbatch with a desired polymer and fed into the extruder. The extruder is generally operated at a temperature higher than that necessary to cause the composition to flow. The extrudate can be immediately quenched in a water bath and pelletized. The pellets so prepared can be one-fourth inch long or less as desired. Such pellets can be used for subsequent molding, shaping, or forming.

The molded sample of the endcapped polycarbonate can have a haze of less than 10%, or less than 3% as measured according to ASTM D1003-00, Procedure B, illuminant C, on a spectrophotometer, at a thickness of 3.2 mm.

The molded sample of the endcapped polycarbonate can have a visible transmission of greater than or equal to 70% as determined according to ASTM D1003-00, Procedure A, using D65 illumination, 10 degrees observer, at a thickness of 3.2 mm.

The molded sample of the endcapped polycarbonate can have a change in color of less than 0.5 unit lower than the change in color of the control after heat aging.

The molded sample of the endcapped polycarbonate can have lower color, less plate-out after molding, or a combination thereof.

Shaped, formed, or molded articles comprising the thermoplastic compositions are also provided. Compositions comprising the endcapped polycarbonate can be molded into useful shaped articles by a variety of methods, such as injection molding, extrusion, rotational molding, blow molding, and thermoforming.

Exemplary articles include, for example, enclosures, housings, panels, and parts for outdoor vehicles and devices; enclosures for electrical and telecommunication devices; outdoor furniture; aircraft components; boats and marine equipment, including trim, enclosures, and housings; outboard motor housings; depth finder housings; personal water-craft; jet-skis; pools; spas; hot tubs; steps; step coverings; building and construction applications such as glazing, roofs, windows, floors, decorative window furnishings or treatments; treated glass covers for pictures, paintings, posters, and like display items; wall panels, and doors; counter tops; protected graphics; outdoor and indoor signs; enclosures, housings, panels, and parts for automatic teller machines (ATM); computer; desk-top computer; portable computer; lap-top computer; hand held computer housings; monitor; printer; keyboards; FAX machine; copier; telephone; phone bezels; mobile phone; radio sender; radio receiver; enclosures, housings, panels, and parts for lawn and garden tractors, lawn mowers, and tools, including lawn and garden tools; window and door trim; sports equipment and toys; enclosures, housings, panels, and parts for snowmobiles; recreational vehicle panels and components; playground equipment; shoe laces; articles made from plastic-wood combinations; golf course markers; utility pit covers; light fixtures; lighting appliances; network interface device housings; transformer housings; air conditioner housings; cladding or seating for public transportation; cladding or seating for trains, subways, or buses; meter housings; antenna housings; cladding for satellite dishes; coated helmets and personal protective equipment; coated synthetic or natural textiles; coated painted articles; coated dyed articles; coated fluorescent articles; coated foam articles; and like applications.

The article can be a lens e.g., a camera lens, a sensor lens, an illumination lens, a safety glass lens, an ophthalmic corrective lens, or an imaging lens. The lens can be hardcoated.

The article comprising the thermoplastic composition can be a metallized article. The metallized article comprises, for example, a substrate comprising the thermoplastic composition with a metal layer disposed on the at least one side of the substrate.

The substrate can be for example, a film. The substrate can be made by molding the thermoplastic composition. The molding methods are not particularly limited, and various known molding methods can be listed, for example, injection molding, gas assist injection molding, vacuum molding, extrusion, compression molding, calendaring, rotary molding, etc. Of these, molding is usually carried out by injection molding.

The metal layer can be disposed onto the surface of the substrate with the aid of electrocoating deposition, physical vapor deposition, or chemical vapor deposition or a suitable combination of these methods. Sputtering processes can also be used. The metal layer resulting from the metallizing process (e.g., by vapor deposition) can be 0.001 to 50 micrometers (µm) thick.

A base coat can be present between the substrate and the metal layer. However, it is advantageous to form the metal layer directly on the substrate surface without forming an undercoat. The surfaces of the substrate are smooth and good gloss can be obtained even by direct metal vapor deposition without treating the substrate with primer. Moreover, the release properties of the molded substrate during injection molding are good. Accordingly, the surface properties of the molded substrate are superior without replication of mold unevenness.

Chrome, nickel, aluminum, etc. can be listed as examples of vaporizing metals. Aluminum vapor deposition is used in one aspect as metal vapor deposition. The surface of the molded substrate can be treated with plasma, cleaned, or degreased before vapor deposition in order to increase adhesion.

The metallized article can have a protective layer disposed on the metal layer. "Protective layer" refers for example, to a layer which is made of a binder or a high molecular weight polymer and formed on the outermost (e.g., the UV blocking) layer, so as to exert the effects of preventing marring and improving mechanical properties of the multilayer article. The protective layer can be clear or pigmented and be formulated, for example, with nitrocellulose or synthetic polymers configured to quickly dry by evaporation without chemical reaction with the layer on which they are disposed, providing a solid protective layer. The protective coating material can further be thinned with alcohols. In certain applications, the thickness of the protective layer is minimized. The thickness of the protective layer can be, for example, 0.2 µm or less.

The metallized articles can have little mold shrinkage, have good surface gloss even when metal layers are directly vapor deposited, and the vapor deposited surfaces do not become cloudy or have rainbow patterns even on heating of the vapor deposited surface. In particular, the metallized article can have no surface defects visible to the eye.

Metallized articles have applications in optical reflectors and can be used for automotive headlamps, headlight extensions, and headlamp reflectors, for indoor illumination, for vehicle interior illumination and for the like.

This disclosure is further illustrated by the following non-limiting examples.

### EXAMPLES

The materials used in the Examples are described in Table 1.

**Table 1.**

| Component | Chemical Description | Source |
|---|---|---|
| PC-1 | Linear bisphenol A polycarbonate, end capped with p-cumylphenol (PCP), Mw = 29,000 g/mol as determined by GPC using homopolycarbonate standards | SABIC |
| PC-2 | Copolycarbonate of bisphenol A (BPA) and bisphenol isophorone (4,4'-(3,3,5-trimethylcyclohexane-1,1-diyl)diphenol or "BPI"), 80 mol% BPI, PCP endcaps and optionally thioether carbonyl endcaps | Present disclosure |
| PC-3 | Copolycarbonate of BPA and N-phenylphenolphthaleinylbisphenol (PPPBP), 33 mol % PPPBP, PCP endcaps and optionally thioether carbonyl endcaps | Present disclosure |
| PC-4 | Copolycarbonate terpolymer comprising units derive from BPA, BPI, and PPPBP, 20 mol% BPA, 70 mol% BPI, and 10 mol% PPPBP, PCP endcaps and optionally thioether carbonyl endcaps | Present disclosure |

| BPA | Bisphenol A, contains 1.5 ppm of sulfur | Kumho / Sumitomo |
|---|---|---|
| BPI | Bisphenol isophorone, contains 4 ppm of sulfur | SABIC |
| PPPBP | N-phenyl phenolphthalein bisphenol | SABIC |
| PCP | p-Cumylphenol | Sigma-Aldrich |
| DLTDP | Dilauryl 3,3'-thiodipropionate, CAS Reg. No. 123-28-4 | Sigma-Aldrich |
| DMP | S-dodecyl-3-mercaptopropionic acid, CAS Reg. No. 1462-52-8 | TCI |
| PMP | S-phenyl-3-mercaptopropionate, CAS Reg. No. 5219-65-8 | Enamine Store |
| Phosphite Stabilizer | Tris(2,4-di-tert-butylphenyl)phosphite, obtained as IRGAPHOS 168 | BASF |
| PETS | Pentaerythritol stearate | Lonza |

### Testing Methods

Weight average molecular weight (Mw) determinations were performed using GPC using a cross linked styrene-divinyl benzene column, at a sample concentration of 1 milligram (mg) per milliliter (mL), and as calibrated with bisphenol A homopolycarbonate standards. Samples were eluted at a flow rate of 1.0 mL/min with methylene chloride as the eluent.

Glass transition temperature (Tg) was determined by differential scanning calorimetry (DSC) according to ASTM D3418 with a 20°C/min heating rate.

Melt volume rate (MVR) was determined according to ASTM D1238-04 under the conditions listed in the Tables.

Yellowness index (YI) was determined according to ASTM D1925 on color chis having a thickness of 3.175 mm (0.125 inch).

Sulfur concentration was determined by oxidative combustion microcoulometry of a solid sample at 1,100° C. The vapors emanating from the sample during the destruction were led through a scrubber followed by a fluorescence detector with a flow of argon and oxygen. Under these conditions, the sulfur was converted into sulfur dioxide (SO₂). The total sulfur concentration in the sample was determined based on the response of the fluorescence detector. Sulfur quantification was performed using a Thermo Euroglass ECS3000 analyzer with a TS-UV module (Thermo Fisher Scientific).

### Example 1

A model system was used to first establish the stability and usefulness of the sulfur stabilizers. Accordingly, a BPA polycarbonate (PC-1) was formulated with different levels of dilauryl thiodipropionate (DLTDP) as blends 1-A to 1-F as shown in Table 2. The amount of each additive is based on 100 wt% of the polycarbonate.

**Table 2.**

| Ex. No. | Units | 1-A | 1-B | 1-C | 1-D | 1-E | 1-F |
|---|---|---|---|---|---|---|---|
| Added sulfur level from DLTDP | ppm | 0 | 5 | 10 | 5 | 30 | 0 |
| PC-1 | wt% | 100 | 100 | 100 | 100 | 100 | 100 |
| PS | wt% | 0.1 | 0.1 | 0.1 | 0.1 | 0.1 | 0.1 |
| PETS | wt% | 0.04 | 0.04 | 0.04 | 0.04 | 0.04 | 0.04 |
| DLTDP | wt% | 0 | 0.008 | 0.016 | 0.008 | 0.048 | |
| | | | | | | | |
| MVR 330°C, 360 sec, 2.16 kg | cm³/10 min | 26.1 | 25 | 25.9 | 26.9 | 27.4 | 25.4 |
| MVR 330°C, 1080 sec, 2.16 kg | cm³/10 min | 28.3 | 27.8 | 27.5 | 27.8 | 27.9 | 27.7 |
| MVR shift after 6 to 10 min dwell | % | -8.43 | -11.20 | -6.18 | -3.35 | -1.82 | -9.06 |

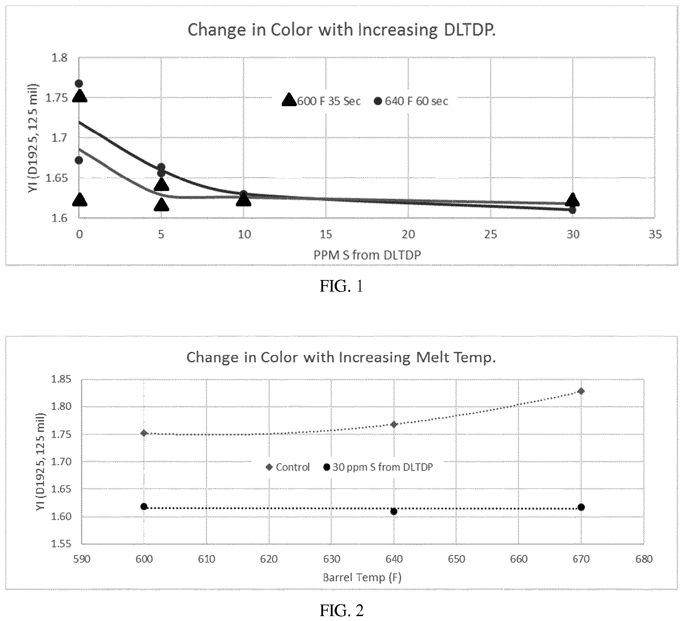

The blends in Table 2 were extruded on a twin-screw extruder and molded at 316°C for 35 seconds (standard) or 338°C for 60 seconds (abusive). Table 2 shows that there is no significant loss in melt stability with increasing sulfur level relative to the baseline (1-A). FIG. 1 shows that as-molded YI decreases with increasing sulfur level. In addition, as the sulfur level increases to 10 ppm or greater, there is little difference in melt stability between the abusive and normal conditions. FIG. 2 shows that the sample with 30 ppm of sulfur exhibited substantially no change in YI with increasing temperature, whereas the YI of the sample without the sulfur stabilizer increased significantly with increasing molding temperature.

### Examples 2 to 5

Samples were prepared containing PC-2 (Example 2), PC-2 with DMP as a thioether carbonyl endcapping agent (Examples 3 and 4), and PC-2 with PMP as a thioether carbonyl endcapping agent (Example 5).

Example 2 was prepared as follows. 6.0 g (26.3 mmol) of BPA, 32.6 g (105.1 mmol) of BPI, and 1.12 g (5.3 mmol) of PCP were suspended in 300 mL of deionized water and 500 mL of dichloromethane. 370 µL (2.6 mmol) of triethylamine was then added thereto. The mixture was mechanically stirred for 5 minutes (min.). To start polymerization, phosgene was bubbled into the mixture at a rate of 1 g/min for 18 min. To this, a caustic aqueous solution (33 wt%) was added to maintain the pH at 9.5. After the reaction, phosgene was purged with nitrogen for 15-20 min. The phases were then separated, and the organic layer was washed with 1 × 500 mL of 0.1 molar (M) HCl. After that, the dichloromethane phase was washed with 5 × 500 mL deionized water and the resulting copolymer PC-1 was precipitated by pouring the organic phase on hot water with mechanical stirring.

Example 3 was prepared in the same way as Example 2, except 2 mg of DMP (6 ppm of added sulfur) was added to the mixture prior to the introduction of phosgene. To start polymerization, phosgene was bubbled into the mixture at a rate of 1 g/min for 18 min. To this, a caustic aqueous solution (33 wt%) was added to maintain the pH at 5 for the first 5 min, and then the caustic addition rate was adjusted to achieve a target pH of 9.5. After the reaction, phosgene was purged with nitrogen and the product was obtained using the same workup as Example 2.

For Example 4, PC-2 with DMP as a thioether carbonyl endcapping agent (73 ppm of added sulfur) was prepared in the same manner as Example 3, except 24.5 mg of DMP was used. For Example 5, PC-2 with PMP as a thioether carbonyl endcapping agent (73 ppm of added sulfur) was prepared in the same manner as Example 3, except 23 mg of PMP was used instead of DMP.

Table 3 shows the properties for Examples 2 to 5.

**Table 3.**

| Example | Sulfur End Cap | Mw (g/mol) | Mw/Mn | [S] Charged (ppm) | [S] Found (ppm) | Tg (°C) |
|---|---|---|---|---|---|---|
| 2 | None | 24,028 | 3.94 | 0 | 7 | 216 |
| 3 | DMP | 21,506 | 3.51 | 6 | 15 | 216 |
| 4 | DMP | 22,067 | 3.65 | 73 | 98 | 216 |
| 5 | PMP | 22,733 | 3.15 | 73 | 133 | 213 |

As seen in Table 3, thioether carbonyl endcapping agents (DMP and PMP) resulted in formation of thioether carbonyl endcaps in the resulting polycarbonates, as shown by the increase in sulfur content in the polycarbonate when compared with the control (Example 2).

### Example 6

PC-3 was prepared as follows. 42.1 g (184 mmol) of BPA, 31.7 g (79.0 mmol) of PPPBP, and 2.45 g (11.5 mmol) of PCP were suspended in 300 mL of deionized water and 500 mL of dichloromethane. To this, 0.73 g (5.3 mmol) of triethylamine was added. The mixture was mechanically stirred for 5 min. To start polymerization, phosgene was bubbled into the mixture at a rate of 1 g/min for 35 min and the pH was regulated to 5 for the first 5 min, then the caustic addition rate was adjusted to achieve a target pH of 9.5 to 10 using aqueous caustic (33 wt%). After the reaction, phosgene was purged with nitrogen for 15-20 min. The phases were separated, and the organic layer was washed with 1 × 500 mL of 0.1 M HCl. After that, the dichloromethane phase was washed with 4 × 500 mL deionized water and the copolymer was precipitated by pouring the organic phase on hot water with mechanical stirring.

### Example 7

PC-3 with DMP as a thioether carbonyl endcapping agent (5 ppm of added sulfur) was prepared in the same manner as Example 6, except the mixture further included 3.4 mg of DMP.

### Example 8

PC-4 terpolymer was prepared as follows. 10.56 g (46.3 mmol) of BPA, 50.33 g (162.1 mmol) of BPI, and 2.46 g (11.6 mmol) of PCP were suspended in 265 mL of deionized water and 500 mL of dichloromethane. To this, 0.65 mL (4.6 mmol) of triethylamine was added. The mixture was mechanically stirred for 5 min. To start polymerization, phosgene was bubbled into the mixture at a rate of 1 g/min for 30.5 min and the pH was regulated to 5 for the first 5 min, then the caustic addition rate was adjusted to achieve a target pH of 9.5 to 10 using aqueous caustic (33 wt%). Concurrently, a solution containing 9.11 g (23.2 mmol) of PPPBP, 5.8 g of caustic aqueous solution (33 wt%), and 20 g of water was added to the mixture over the first 12 min. After the reaction, phosgene was purged with nitrogen for 15-20 min. The phases were separated, and the organic layer was washed with 1 × 500 mL of 0.1 M HCl. Then, the dichloromethane phase was washed with 4 × 500 mL deionized water and the terpolymer was precipitated by pouring the organic phase on hot water with mechanical stirring.

### Example 9

PC-4 terpolymer with DMP as a thioether carbonyl endcapping agent (6 ppm of added sulfur) was prepared in the same manner as Example 8, except the mixture further included 3.2 mg of DMP.

Table 4 shows the properties for Examples 6 to 9.

**Table 4.**

| Example | PPPBP/BPI/BPA (molar ratio) | Sulfur End Cap | Mw (g/mol) | [S] Charged (ppm) |
|---|---|---|---|---|
| 6 | 30/0/70 | None | 21,000 | 0 |
| 7 | 30/0/70 | DMP | 21,000 | 5 |
| 8 | 10/70/20 | None | 22,000 | 0 |
| 9 | 10/70/20 | DMP | 22,000 | 6 |

### Examples 10 to 12

Samples were prepared of PC-2 (Example 10), PC-2 containing 12 ppm of added sulfur from DMP (Example 11), or 36 ppm (Example 12) of added sulfur from DMP.

Example 10 was prepared as follows. To a mixture of 22 L of methylene chloride, 9 L of deionized water, 715.1 g of BPA (3.132 mol), 3890 of BPI (12.53 mol), 144.3 g of PCP (0.6798 mol, 4.34 mol %), 29 g of triethylamine (1.9 mol %), and 10 g of sodium gluconate in a 75-L reactor equipped with mechanical stirring, recirculation line with pH probe, subsurface phosgene addition, chilled glycol condenser, caustic scrubber for the exit gas, and caustic solution inlet was added 2360 g of phosgene (23.83 mol) at a rate of 80 g/min. Aqueous caustic (33 wt%) was added to maintain a pH of 8-9 in the reactor. After completion of the reaction, the reactor was then purged with nitrogen to remove any free phosgene. The batch was transferred to a 100-L work-up tank. The batch was purified on a centrifuge train where the brine phase was separated and the resin solution in methylene chloride was extracted with aqueous HCl, and then as washed with deionized water until titratable chlorides were less than 5 ppm. The methylene chloride solution was then steam-precipitated, and the polymer dried under hot nitrogen until volatile levels were less than 0.4 wt%.

PC-2 containing 12 ppm (Example 11) or 36 ppm (Example 12) of added sulfur from DMP were prepared in the same manner as Example 10, except an appropriate amount of DMP was added prior to phosgenation. 2360 g of phosgene (23.83 mol) was introduced at a rate of 80 g/min. Aqueous caustic (33 wt%) was added to maintain a pH of 5 to 7 in the reactor for 10 min, after which time the pH was adjusted to 9-10. After completion of the reaction, the reactor was then purged with nitrogen to remove any free phosgene. Workup and purification was the same as for Example 10.

The copolymers of Examples 10 to 12 were dry blended with 0.1 wt% of phosphite stabilizer and 0.04 wt% of PETS and mixed in a paint shaker. The blends were extruded on 26 mm twin-screw extruder having vacuum venting with barrel temperatures set points ramped from 177 to 293°C (feed to die throat) and a screw speed of 850 rpm. The extrudate was cooled in a water bath and then chopped into pellets for testing and molding.

A 180-ton injection molding machine with a 0.1488 kg barrel was used to mold color plaques having a thickness of 3.175 mm. The copolymer blends were molded at 316°C for 35 seconds (standard) or 338°C for 60 seconds (abusive).

### Examples 13 to 17

Samples of PC-4 with DMP as a thioether carbonyl endcapping agent were prepared using an interfacial process to provide PC-4 having an added sulfur content of 0 ppm (Example 13), 12 ppm (Example 14), and 36 ppm (Example 15).

Examples 13 to 15 were prepared as follows. In an exemplary process, PPP-BPI-BPA (10/70/20) with 12 ppm of added sulfur (Example 14) was prepared as follows. To a mixture of 22 L of methylene chloride, 9 L of deionized water, 686.5 g of BPA (3.007 mol), 3267 g of BPI (10.53 mol), 591.5 g of PPPBP (1.504 mol), 0.51 g DMP (1.9 mmol), 139.8 g of p-cumylphenol (0.659 mol), 25 mL of triethylamine, and 10 g of sodium gluconate in a 75 L reactor equipped with mechanical stirring, recirculation line with pH probe, subsurface phosgene addition, chilled glycol condenser, caustic scrubber for exit gas, and caustic solution inlet was added 2200 g of phosgene at a rate of 70 g/min. Aqueous caustic (33 wt%) was added as needed to maintain pH of 5 to 8 for the first 10 min. Then the caustic addition was adjusted to target a pH of 9 to 9.5 in the reactor. After the phosgene was added, the reactor was then purged with nitrogen. A sample was obtained for GPC analysis. An additional 200 g of phosgene was added, and the Mw was determined. The process was repeated until the MW increase was less than 200 g/mol. The polymer mixture was transferred to the 100 L work-up tank and purified on a centrifuge train where the brine phase was separated and the polymer solution in methylene chloride was extracted with aqueous HCl and then washed with deionized water until titratable chlorides were less than 5 ppm. The polymer solution was then steam-precipitated, and the resultant polymer dried under hot nitrogen until volatile levels were <0.4 wt%.

The same procedure as Example 14 was followed, except the ratio of PPPBP-BPI-BPA was 15/65/20 (Example 16) or 20/65/17 (Example 17). Table 5 provides properties for terpolymers of Examples 14, 16, and 17.

**Table 5.**

| | PPPBP/BPI/BPA ratio | Mw (g/mol) | Tg (°C) |
|---|---|---|---|
| Example 14 | 10/70/20 | 22,500 | 215 |
| Example 16 | 15/65/20 | 22,500 | 215 |
| Example 17 | 20/65/17 | 22,500 | 225 |

The copolymers of Examples 13 to 15 were dry blended with 0.1 wt% of phosphite stabilizer and 0.04 wt% of PETS, mixed in a paint shaker, and then extruded and molded using the same conditions as for Examples 10 to 12.

The compositions, methods, and articles disclosed herein can alternatively comprise, consist of, or consist essentially of, any appropriate components or steps herein disclosed. The compositions, methods, and articles can additionally, or alternatively, be formulated so as to be devoid, or substantially free, of any steps, components, materials, ingredients, adjuvants, or species that are otherwise not necessary to the achievement of the function and/or objectives of the compositions, methods, and articles.

The singular forms "a", "an", and "the" include plural referents unless the context clearly dictates otherwise. "Combinations" is inclusive of blends, mixtures, alloys, reaction products, and the like. "Or" means "and/or" unless clearly indicated otherwise by context. Reference to "an aspect" means that a particular element described in connection with the aspect is included in at least one aspect described herein and may or may not be present in other aspects. A "combination thereof' is open and includes any combination comprising at least one of the listed elements, optionally together with a like or equivalent element not listed. The described elements may be combined in any suitable manner in the various aspects.

The endpoints of all ranges directed to the same component or property are inclusive and independently combinable Disclosure of a narrower range or more specific group in addition to a broader range is not a disclaimer of the broader range or larger group.

As used herein, the term "alkyl" means a straight or branched chain, saturated monovalent hydrocarbon group; "alkylene" means a straight or branched chain, saturated, divalent hydrocarbon group; "alkylidene" means a straight or branched chain, saturated divalent hydrocarbon group, with both valences on a single common carbon atom; "alkenyl" means a straight or branched chain monovalent hydrocarbon group having at least two carbons joined by a carbon-carbon double bond; "cycloalkyl" means a non-aromatic monovalent monocyclic or multicyclic hydrocarbon group having at least three carbon atoms, "aryl" means an aromatic monovalent group containing only carbon in the aromatic ring or rings; "arylene" means an aromatic divalent group containing only carbon in the aromatic ring or rings; "alkylarylene" means an aryl group substituted with an alkyl group, where 4-methylphenyl is an exemplary alkylarylene group; "arylalkylene" means an alkylene group substituted with an aryl group, where benzyl is an exemplary arylalkylene group; "alkoxy" means an alkyl group substituted with the indicated number of carbon atoms attached through an oxygen bridge (-O-); and "aryloxy" means an aryl group as defined above with the indicated number of carbon atoms attached through an oxygen bridge (-O-).

Unless otherwise indicated, each of the foregoing groups can be unsubstituted or substituted, provided that the substitution does not significantly adversely affect synthesis, stability, or use of the compound. The term "substituted" means that at least one hydrogen on the designated atom or group is replaced with another group, provided that the designated atom's normal valence is not exceeded. When the substituent is oxo (i.e., =O), then two hydrogens on the atom are replaced. Combinations of substituents or variables are permissible provided that the substitutions do not significantly adversely affect synthesis or use of the compound. Exemplary groups that can be present on a "substituted" position include but are not limited to cyano; hydroxyl; nitro; azido; alkanoyl (e.g., a C₂₋₆ alkanoyl group such as acyl (H₃CC(=O)-)); carboxamido; C₁₋₆ or C₁₋₃ alkyl, cycloalkyl, alkenyl, and alkynyl (including groups having at least one unsaturated linkages and from 2 to 8, or 2 to 6 carbon atoms); C₁₋₆ or C₁₋₃ alkoxys; C₆₋₁₀ aryloxy such as phenoxy; C₁₋₆ alkylthio; C₁₋₆ or C₁₋₃ alkylsulfinyl; C₁₋₆ or C₁₋₃ alkylsulfonyl; aminodi(C₁₋₆ or C₁₋₃)alkyl; C₆₋₁₂ aryl having at least one aromatic rings (e.g., phenyl, biphenyl, naphthyl, or the like, each ring either substituted or unsubstituted aromatic); C₇₋₁₉ arylalkylene having 1 to 3 separate or fused rings and from 6 to 18 ring carbon atoms; or arylalkyleneoxy having 1 to 3 separate or fused rings and from 6 to 18 ring carbon atoms, with benzyloxy being an exemplary arylalkyleneoxy. The stated number of carbon atoms includes any substituents.

Unless specified to the contrary herein, all test standards are the most recent standard in effect as of the filing date of this application, or, if priority is claimed, the filing date of the earliest priority application in which the test standard appears. Unless defined otherwise, technical and scientific terms used herein have the same meaning as is commonly understood by one of skill in the art to which this invention belongs.

## Claims

1. An endcapped polycarbonate comprising thioether carbonyl endcaps of the formula 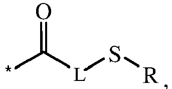 wherein L is a C₁₋₁₂ aliphatic or aromatic linking group, and R is a C₁₋₂₀ alkyl, C₆₋₁₈ aryl, or C₇₋₂₄ arylalkylene.

2. The endcapped polycarbonate of claim 1, wherein the thioether carbonyl endcaps are of the formula 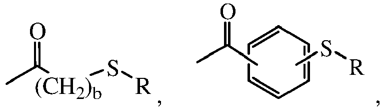 or a combination thereof, wherein R is a C₁₋₂₀ alkyl, C₆₋₁₈ aryl, or C₇₋₂₄ arylalkylene, preferably a C₁₋₁₄ alkyl, C₆₋₁₂ aryl, or a C₇₋₁₃ arylalkylene, and b is 1 to 5, preferably 1 to 2.

3. The endcapped polycarbonate of claim 1 or 2, wherein the thioether carbonyl endcaps are of the formula 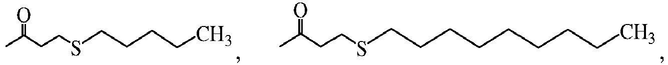 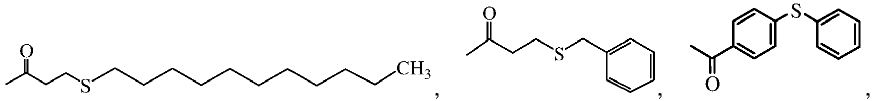 or a combination thereof.

4. The endcapped polycarbonate of any one or more of the preceding claims,
wherein the thioether carbonyl endcaps are present in an amount effective to provide 3 to 80 parts per million by weight, preferably 3 to 70 parts per million by weight, more preferably 5 to 50 parts per million by weight, still more preferably 10 to 50 parts per million by weight of added sulfur, based on the total parts by weight of the endcapped polycarbonate; or
having a total sulfur content of 3 to 150 parts per million by weight, preferably 3 to 100 parts per million by weight, or preferably 3 to 70 parts per million by weight, more preferably 5 to 50 parts per million by weight, still more preferably 10 to 50 parts per million by weight, based on the total parts by weight of the endcapped polycarbonate;
or both.

5. The endcapped polycarbonate of any one or more of the preceding claims, wherein the polycarbonate is a homopolycarbonate, a copolycarbonate, a poly(ester-carbonate), a poly(carbonate-siloxane), a poly(ester-carbonate-siloxane), or a combination thereof;
preferably wherein the polycarbonate is a copolycarbonate;
more preferably wherein the copolycarbonate comprises a high heat copolycarbonate having a Tg of 170°C or higher, as measured in the description.

6. The endcapped polycarbonate of any one or more of the preceding claims, wherein the polycarbonate comprises:
0 to 95 mole percent, preferably 5 to 90 mole percent, more preferably 15 to 80 mole percent of low heat aromatic dihydroxy monomer groups; and
5 to 100 mole percent, preferably 10 to 95 mole percent, more preferably 20 to 85 mole percent of high heat aromatic dihydroxy monomer groups.

7. The endcapped polycarbonate of claim 7, wherein the low heat aromatic dihydroxy monomer groups are bisphenol A groups, and the high heat aromatic dihydroxy monomer groups are of the formula 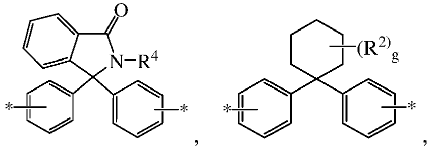 or a combination thereof, wherein R⁴ is methyl or phenyl, each R² is methyl, and g is 1 to 4;
preferably wherein the high heat aromatic dihydroxy monomer groups are of the formula 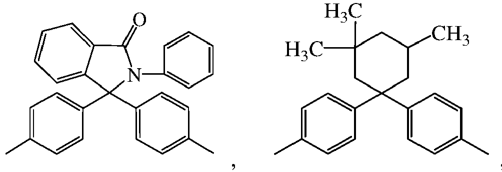 , or a combination thereof.

8. The endcapped polycarbonate of any one or more of the preceding claims wherein, compared to the same polycarbonate without the thioether carbonyl endcaps, the endcapped polycarbonate has lower yellowness index as determined according to ASTM D1925

9. The endcapped polycarbonate of any one or more of the preceding claims, wherein a molded sample of the endcapped polycarbonate has at least one of
a haze of less than 10%, or less than 3% as measured according to ASTM D1003-00, Procedure B, illuminant C, on a spectrophotometer, at a thickness of 3.2 mm;
a visible transmission of greater than or equal to 70% as determined according to ASTM D1003-00, Procedure A, using D65 illumination, 10 degrees observer, at a thickness of 3.2 mm.

10. A method for the manufacture of the endcapped polycarbonate of any one or more of the preceding claims, the method comprising reacting a thioether carbonyl endcapping agent of the formula: 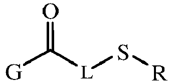
during manufacturing the polycarbonate from a bisphenol,
wherein G is a leaving group, L is a C₁₋₁₂ aliphatic or aromatic linking group, and R is a C₁₋₂₀ alkyl, C₆₋₁₈ aryl, or C₇₋₂₄ arylalkylene.

11. The method of claim 10, wherein the manufacturing is by interfacial polymerization, and G is a hydroxy group, a salt of a hydroxy group, or a halide.

12. The method of claim 10, wherein the manufacturing is in the melt, and G is a hydroxy group or a salt of a hydroxy group.

13. The method of claim 10, comprising combining the thioether carbonyl endcapping agent with the bisphenol, wherein the combining is: during manufacturing of the bisphenol, during dissolution of the bisphenol before manufacturing the polycarbonate, at the same time that the bisphenol is added to a reaction mixture to form the polycarbonate, during phosgenation to form the polycarbonate, before shipping the bisphenol, or before storing the bisphenol.

14. A method of manufacturing an article comprising the endcapped polycarbonate of any of one or more of claims 1 to 9, preferably wherein the manufacturing comprises injection molding or extruding the endcapped polycarbonate.

15. An article comprising the endcapped polycarbonate of any of one or more of claims 1 to 9, preferably wherein the article is a molded article, an extruded layer, or an extruded fiber, preferably wherein the article is a lens that is optionally hardcoated.

## Patentansprüche

1. Ein endcapped Polycarbonat, das Thioether-Carbonyl-Endcaps mit folgender Formel umfasst: 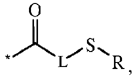 worin L eine aliphatische oder aromatische C₁₋₁₂-Verknüpfungsgruppe ist und R ein C₁₋₂₀-Alkyl, C₆₋₁₈-Aryl oder C₇₋₂₄-Arylalkylen ist.

2. Das endcapped Polycarbonat gemäß Anspruch 1, wobei die Thioether-Carbonyl-Endcaps folgende Formel haben: 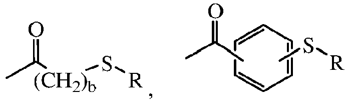 oder eine Kombination davon, worin R ein C₁₋₂₀-Alkyl, C₆₋₁₈-Aryl oder C₇₋₂₄-Arylalkylen, vorzugweise ein C₁₋₁₄-Alkyl, C₆₋₁₂-Aryl oder C-₇₋₁₃-Arylalkylen, ist und b 1 bis 5, vorzugweise 1 bis 2, ist.

3. Das endcapped Polycarbonat gemäß Anspruch 1 oder 2, wobei die Thioether-Carbonyl-Endcaps folgende Formel haben: 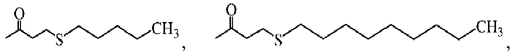 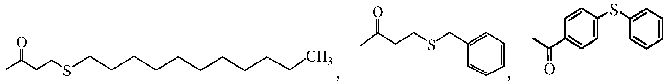 oder eine Kombination davon.

4. Das endcapped Polycarbonat gemäß einem beliebigen oder mehreren der obigen Ansprüche,
wobei die Thioether-Carbonyl-Endcaps in einer Menge vorliegen, die wirksam ist, um 3 bis 80 Gewichtsteile je Million Teile, vorzugweise 3 bis 70 Gewichtsteile je Million Teile, stärker bevorzugt 5 bis 50 Gewichtsteile je Million Teile, noch stärker bevorzugt 10 bis 50 Gewichtsteile je Million Teile, von hinzugefügtem Schwefel zu liefern, basierend auf den Gesamt-Gewichtsteilen des endcapped Polycarbonats; oder
mit einem Gesamtschwefelgehalt von 3 bis 150 Gewichtsteilen je Million Teile, vorzugweise 3 bis 100 Gewichtsteilen je Million Teile, oder vorzugweise 3 bis 70 Gewichtsteilen je Million Teile, stärker bevorzugt 5 bis 50 Gewichtsteilen je Million Teile, noch stärker bevorzugt 10 bis 50 Gewichtsteilen je Million Teile, basierend auf den Gesamt-Gewichtsteilen des endcapped Polycarbonats;
oder beides.

5. Das endcapped Polycarbonat gemäß einem beliebigen oder mehreren der obigen Ansprüche, wobei das Polycarbonat ein Homopolycarbonat, ein Copolycarbonat, ein Poly(ester-carbonat), ein Poly(carbonat-siloxan), ein Poly(ester-carbonat-siloxan) oder eine Kombination davon ist;
wobei das Polycarbonat vorzugweise ein Copolycarbonat ist;
wobei das Copolycarbonat stärker bevorzugt ein Hochtemperatur-Copolycarbonat umfasst, das eine Tg von 170°C oder höher, gemessen wie in der Beschreibung, umfasst.

6. Das endcapped Polycarbonat gemäß einem beliebigen oder mehreren der obigen Ansprüche, das Folgendes umfasst:
0 bis 95 Molprozent, vorzugweise 5 bis 90 Molprozent, stärker bevorzugt 15 bis 80 Molprozent, aromatischer Niedertemperatur-Dihydroxymonomergruppen und
5 bis 100 Molprozent, vorzugweise 10 bis 95 Molprozent, stärker bevorzugt 20 bis 85 Molprozent, aromatischer Hochtemperatur-Dihydroxymonomergruppen.

7. Das endcapped Polycarbonat gemäß Anspruch 7, wobei die aromatischen Niedertemperatur-Dihydroxymonomergruppen Bisphenol A-Gruppen sind und die aromatischen Hochtemperatur-Dihydroxymonomergruppen folgende Formel haben: 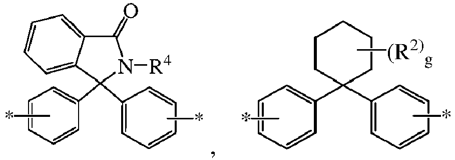 oder eine Kombination davon, worin R⁴ Methyl oder Phenyl ist, jedes R² Methyl ist und g 1 bis 4 ist;
wobei die aromatischen Hochtemperatur-Dihydroxymonomergruppen folgende Formel haben: 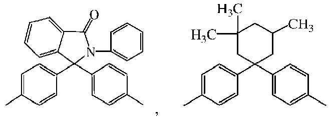 oder eine Kombination davon.

8. Das endcapped Polycarbonat gemäß einem beliebigen oder mehreren der obigen Anspüche, wobei, verglichen mit demselben Polycarbonat ohne die Thioether-Carbonyl-Endcaps, das endcapped Polycarbonat eine geringere Vergilbung hat, bestimmt nach ASTM D1925.

9. Das endcapped Polycarbonat gemäß einem beliebigen oder mehreren der obigen Ansprüche, wobei ein Formteil des endcapped Polycarbonats mindestens eines von Folgendem hat:
eine Trübung von weniger als 10% oder weniger als 3%, gemessen nach ASTM D1003-00, Verfahren B, Normlichtart C, auf einem Spektrophotometer, bei einer Dicke von 3,2 mm;
eine sichtbare Durchlässigkeit von mindestens 70%, bestimmt nach ASTM D1003-00, Verfahren A, unter Verwendung einer Beleuchtung von D65, 10° Beobachter, bei einer Dicke von 3,2 mm.

10. Ein Verfahren zur Herstellung des endcapped Polycarbonats gemäß einem beliebigen oder mehreren der obigen Ansprüche, wobei das Verfahren das Reagieren eines Thioether-Carbonyl-Endcapping-Mittels mit der Formel: 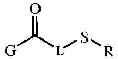
während der Herstellung des Polycarbonats aus einem Bisphenol umfasst,
worin G eine Abgangsgruppe ist, L eine aliphatische oder aromatische C₁₋₁₂-Verknüpfungsgruppe ist und R ein C₁₋₂₀-Alkyl, C₆₋₁₈-Aryl oder C₇₋₂₄-Arylalkylen ist.

11. Das Verfahren gemäß Anspruch 10, wobei die Herstellung durch Grenzflächenpolymerisation stattfindet und G eine Hydroxygruppe, ein Salz einer Hydroxygruppe oder ein Halogenid ist.

12. Das Verfahren gemäß Anspruch 10, wobei die Herstellung in der Schmelze stattfindet und G eine Hydroxygruppe oder ein Salz einer Hydroxygruppe ist.

13. Das Verfahren gemäß Anspruch 10, das das Kombinieren des Thioether-Carbonyl-Endcapping-Mittels mit dem Bisphenol umfasst, wobei das Kombinieren während des Herstellens des Bisphenols; während der Auflösung des Bisphenols vor Herstellung des Polycarbonats; gleichzeitig mit dem Hinzugeben des Bisphenols zu einer Reaktionsmischung, um das Polycarbonat zu bilden; während der Phosgenierung, um das Polycarbonat zu bilden; vor dem Versand des Bisphenols oder vor der Lagerung des Bisphenols stattfindet.

14. Ein Verfahren zur Herstellung eines Gegenstands, der das endcapped Polycarbonat gemäß einem beliebigen oder mehreren der Ansprüche 1 bis 9 umfasst, wobei die Herstellung vorzugweise das Spritzgießen oder Extrudieren des endcapped Polycarbonats umfasst.

15. Ein Gegenstand, der das endcapped Polycarbonat gemäß einem beliebigen oder mehreren der Ansprüche 1 bis 9 umfasst, wobei der Gegenstand vorzugweise ein Formteil, eine extrudierte Schicht oder eine extrudierte Faser ist, wobei der Gegenstand vorzugweise eine Linse ist, die wahlweise hartbeschichtet ist.

## Revendications

1. Polycarbonate à coiffes terminales comprenant des coiffes terminales thioéther carbonylique de formule 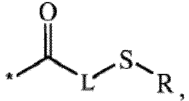 dans lequel L est un groupe de liaison aliphatique ou aromatique en C₁₋₁₂, et R est un groupe alkyle en C₁₋₂₀, un groupe aryle en C₆₋₁₈ ou un groupe arylalkylène en C₇₋₂₄.

2. Polycarbonate à coiffes terminales selon la revendication 1, dans lequel les coiffes terminales thioéther carbonylique sont de formule 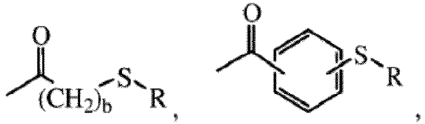 ou une combinaison de celles-ci, dans lequel R est un groupe alkyle en C₁₋₂₀, un groupe aryle en C₆₋₁₈ ou un groupe arylalkylène en C₇₋₂₄, de préférence un groupe alkyle en C₁₋₁₄, un groupe aryle en C₆₋₁₂ ou un groupe arylalkylène en C₇₋₁₃, et b vaut de 1 à 5, de préférence de 1 à 2.

3. Polycarbonate à coiffes terminales selon la revendication 1 ou 2, dans lequel les coiffes terminales thioéther carbonylique sont de formule 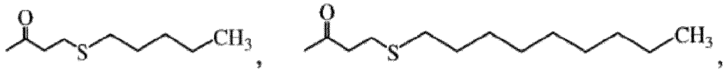 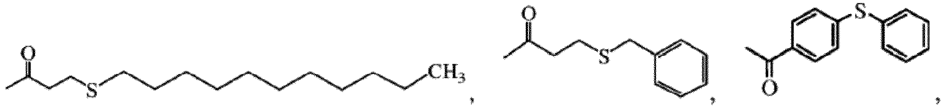 ou une combinaison de celles-ci.

4. Polycarbonate à coiffes terminales selon l'une quelconque ou plusieurs des revendications précédentes, dans lequel les coiffes terminales thioéthers carbonyliques sont présentes en une quantité efficace pour fournir de 3 à 80 parties par million en poids, de préférence de 3 à 70 parties par million en poids, plus préférablement de 5 à 50 parties par million en poids, encore plus préférablement de 10 à 50 parties par million en poids de soufre ajouté, sur la base des parties totales en poids du polycarbonate à coiffes terminales ; ou
ayant une teneur totale en soufre de 3 à 150 parties par million en poids, de préférence de 3 à 100 parties par million en poids, ou de préférence de 3 à 70 parties par million en poids, plus préférablement de 5 à 50 parties par million en poids, encore plus préférablement de 10 à 50 parties par million en poids, sur la base du total des parties en poids du polycarbonate à coiffes terminales ;
ou les deux.

5. Polycarbonate à coiffes terminales selon l'une quelconque ou plusieurs des revendications précédentes, dans lequel le polycarbonate est un homopolycarbonate, un copolycarbonate, un poly(ester-carbonate), un poly(carbonate-siloxane), un poly(ester-carbonate-siloxane), ou une combinaison de ceux-ci ;
de préférence dans lequel le polycarbonate est un copolycarbonate ;
plus préférablement dans lequel le copolycarbonate comprend un copolycarbonate à haute température ayant une Tg de 170 °C ou plus, comme mesuré dans la description.

6. Polycarbonate à coiffes terminales selon l'une quelconque ou plusieurs des revendications précédentes, dans lequel le polycarbonate comprend :
de 0 à 95 % en moles, de préférence de 5 à 90 % en moles, plus préférablement de 15 à 80% en moles de groupes monomères dihydroxy aromatiques à basse température ; et
de 5 à 100% en moles, de préférence de 10 à 95% en moles, plus préférablement de 20 à 85 % en moles de groupes monomères dihydroxy aromatiques à haute température.

7. Polycarbonate à coiffes terminales selon la revendication 7, dans lequel les groupes monomères dihydroxy aromatiques à basse température sont des groupes bisphénol A, et les groupes monomères dihydroxy aromatiques à haute température sont de formule 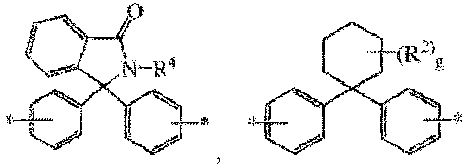 , ou une combinaison de ceux-ci, dans lequel R⁴ est un groupe méthyle ou phényle, chaque R² est un groupe méthyle, et g vaut de 1 à 4 ;
de préférence dans lequel les groupes monomères dihydroxy aromatiques à haute température sont de formule 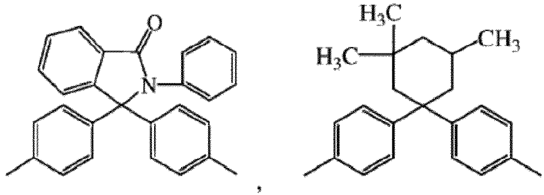 , ou une combinaison de ceux-ci.

8. Polycarbonate à coiffes terminales selon l'une quelconque ou plusieurs des revendications précédentes, dans lequel, par rapport au même polycarbonate sans coiffes terminales thioéthers carbonyliques, le polycarbonate à coiffes terminales a un indice de jaunissement inférieur, comme déterminé selon la norme ASTM D1925.

9. Polycarbonate à coiffes terminales selon l'une quelconque ou plusieurs des revendications précédentes, dans lequel un échantillon moulé du polycarbonate à coiffes terminales présente au moins une caractéristique parmi
un trouble inférieur à 10 % ou inférieur à 3 % comme mesuré selon la norme ASTM D1003-00, procédure B, illuminant C, sur un spectrophotomètre, à une épaisseur de 3,2 mm ;
une transmission visible supérieure ou égale à 70 % comme déterminé selon la norme ASTM D1003-00, procédure A, en utilisant un éclairage D65, un observateur à 10 degrés, à une épaisseur de 3,2 mm.

10. Procédé de production du polycarbonate à coiffes terminales selon l'une quelconque ou plusieurs des revendications précédentes, le procédé comprenant la réaction d'un agent de coiffage thioéther carbonylique de formule : 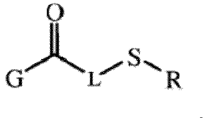
pendant la production du polycarbonate à partir d'un bisphénol,
dans lequel G est un groupe partant, L est un groupe de liaison aliphatique ou aromatique en C₁₋₁₂, et R est un groupe alkyle en C₁₋₂₀, un groupe aryle en C₆₋₁₈ ou un groupe arylalkylène en C₇₋₂₄.

11. Procédé selon la revendication 10, dans lequel la production se fait par polymérisation interfaciale, et G est un groupe hydroxy, un sel d'un groupe hydroxy ou un halogénure.

12. Procédé selon la revendication 10, dans lequel la fabrication se fait dans la masse fondue, et G est un groupe hydroxy ou un sel d'un groupe hydroxy.

13. Procédé selon la revendication 10, comprenant la combinaison de l'agent de coiffage thioéther carbonylique avec le bisphénol, dans lequel la combinaison se fait : pendant la production du bisphénol, pendant la dissolution du bisphénol avant la fabrication du polycarbonate, en même temps que l'ajout du bisphénol à un mélange réactionnel pour former le polycarbonate, pendant la phosgénation pour former le polycarbonate, avant l'expédition du bisphénol ou avant le stockage du bisphénol.

14. Procédé de production d'un article comprenant le polycarbonate à coiffes terminales selon l'une quelconque des revendications 1 à 9, de préférence dans lequel la production comprend le moulage par injection ou l'extrusion du polycarbonate à coiffes terminales.

15. Article comprenant le polycarbonate à coiffes terminales selon l'une quelconque des revendications 1 à 9, de préférence dans lequel l'article est un article moulé, une couche extrudée ou une fibre extrudée, de préférence dans lequel l'article est une lentille qui est éventuellement à revêtement dur.
